(19) Europäisches Patentamt
European Patent Office
Office européen des brevets

(11) **EP 0 636 446 B1**

(12) **EUROPEAN PATENT SPECIFICATION**

(45) Date of publication and mention
of the grant of the patent:
**08.10.1997 Bulletin 1997/41**

(51) Int. Cl.⁶: $B23K\ 20/00$

(21) Application number: **94201749.2**

(22) Date of filing: **18.06.1994**

(54) **A method of welding a pipe in a heat exchanger element**

Ein Verfahren zum Schweissen eines Rohres in ein Wärmetauscherelement

Une méthode de soudage de tube dans un élément d'échangeur de chaleur

(84) Designated Contracting States:
**AT DE FR GB**

(30) Priority: **30.07.1993 IT MI931732**

(43) Date of publication of application:
**01.02.1995 Bulletin 1995/05**

(73) Proprietor: **FINMECCANICA S.p.A. AZIENDA ANSALDO
I-16128 Genova (IT)**

(72) Inventors:
• **Guerreschi, Umberto
I-16128 Genova (IT)**

• **Brossa, Mario
I-10126 Torino (IT)**

(74) Representative: **Ferroni, Filippo et al
Jacobacci & Perani S.p.A.,
Via Visconti di Modrone 7
20122 Milano (IT)**

(56) References cited:
**US-A- 4 183 456**

• **PATENT ABSTRACTS OF JAPAN vol. 8 no. 87 (M-291) ,20 April 1984 & JP-A-59 004985 (KAWAZAKI SEITETSU KK)**

## Description

The present invention relates to a method of welding the outer surface of a metal pipe and the wall of a pipe housing seat in a panel for a heat-exchanger element.

In the present description and the following claims, the term "weld" is intended to indicate, with reference to the relevant national standards (UNI 1307-1309), as well as to the definition of "weld" given in the "Perucca" engineering dictionary, the continuous connection of parts or surfaces which are not exclusively made of metal, obtained by the application of heat, with or without weld material. That is to say, the definition of "weld" covers both the joining of parts which are subject to local fusion and those connections which are effected by the melting of a so-called brazing material interposed between the parts to be welded, as well as intermediate solutions between the two, generally known as braze-welding.

It should, moreover, be added that the exchanger elements to which reference has been made are already known, in particular in the field of energy-production plants both of the conventional and of the nuclear type, in particular as elements intended for the removal of heat from surfaces exposed to high thermal flows. In fact, since these elements consist substantially of a panel inside which a series of pipes for conveying a cooling fluid is accommodated, their heat-exchanging capacity is high and, for this reason, they are used particularly in the parts of fusion reactors which are highly stressed thermally.

Thus, it frequently occurs that the panel of these exchanger elements is made from a ceramic material or graphite or some other material which has good high-temperature resistance properties. It just matters to observe, that these elements are suitable for making true heat shields for walls or other parts making up the above plants, therefore they can be produced in different shapes, that is, they can be plate-shaped or cylindrical elements or, more generally, shaped according to concave or convex surfaces.

It is clear from the above that the exchanger elements in question should have a high heat-transmission capacity; in practice, this capacity is intimately related to the quality of the join between the pipes and the panel in which the pipes are accommodated.

If this quality were not satisfactory, interstitial zones could be produced between pipes and walls of the seats in which they are accommodated, thereby constituting an additional thermal resistance to the flow of heat to be taken away by the element. Moreover, a join of this type affects a second aspect of the operating of the element; in fact, from the point of view of operational safety, these small structural defects could rapidly increase over time owing to the thermal fatigue to which the elements are subject, thus becoming the cause of risk for the operation of the entire plant.

It just matters to be mentioned that a reduced heat-exchange capacity or the spreading of a structural defect of the join would cause the actual operating conditions of the exchanger element to differ from the ideal conditions intended, such that it could have harmful consequences which could be highly dangerous in the case of nuclear plants.

At present, in order to secure the pipes in the corresponding accommodating seats provided in the above-mentioned panels, a braze-welding cycle is adopted in which a braze weld material melts by the effect of a conventional heat treatment in furnaces or the like, thus producing the connection between the pipe and the seats in the panel. This method is restricted by the fact that a tubular interspace, which allows the pipe to be introduced without excessive friction and enables the weld material to be placed, must be provided between the outer surface of the pipe and the wall of the corresponding accommodating seat; when the material itself has melted during the following heat cycle, this tubular interspace will have empty spaces by virtue of the shrinkage of the molten material. As stated above, these empty spaces cannot be tolerated, such that this type of welding between the pipe and the panel is not practicable, above all as regards plants in which safety is of prime importance.

Although, in order to overcome this defect, alternative solutions to those given above have been provided, for example it has been attempted to place the weld material in specific recesses provided in the wall of the seat in which a pipe is accommodated so as to avoid the presence of tubular interspaces, the consequent results have not generally been satisfactory. In fact, the above recesses, although deliberately prepared for this purpose, also present empty spaces when the weld material has melted, thus causing the same problems as described above.

From JP-A-59-004985 it is known a method for coating the inner surface of a metal pipe, by using another thin walled metal pipe inserted therein.

The technical problem which the present invention aims to resolve is that of forming the weld between the outer surfaces of a pipe and the wall of a seat accommodating the pipe in a panel for a heat-exchanger element, with characteristics such that the above-mentioned disadvantages with respect to the prior art are overcome; that is, a weld carried out in such a manner which ensures the absence of empty spaces between said outer surface and wall to be welded, thereby avoiding the disadvantages produced by structural defects of this type. This problem is resolved by a method whose operating steps are characterized in the appended claims.

Further characteristics and advantages of the invention will become clear from the description of one of its embodiments, given below by way of non-limiting example with reference to the appended drawings in which:

- Figure 1 shows a perspective view of an exchanger element during a first step of the method according to the invention;

- Figure 2 shows a sectional side view of the exchanger element of Figure 1, during a second step of the method according to the invention.

With reference to the drawings, a heat-exchanger element in accordance with the present invention is generally indicated 1; this element comprises a plate-shaped panel 2 inside which there are provided a plurality of cylindrical seats 3 defined by corresponding walls 4 and intended to accommodate corresponding pipes 5.

In this example of carrying out the method, there is clearance between the outer surface 5a of the pipes 5 and wall 4 of the corresponding seat accommodating the pipes which enables a brazing material of the conventional type and already described in the prior art to be interposed.

In order to perform the method, the use of an electric oven 10 which comprises a heating chamber 11 and a system of passing conduits 13 connected to a tank 14 for delivering inert gas, constituting respectively a fluid connection and delivery means for the inert gas necessary for performing some steps of the method, is also provided as will become clear from the following description.

Moreover, each conduit 13 passes through one of the two hermetically sealed ends 15 applied in correspondence with opposite ends 16 of each pipe 5 inserted in the panel 2.

With reference to the above-described equipment, an example of welding with braze weld material and performed according to the teaching of the present invention will now be described.

Firstly, the parameters of the process are selected and, more particularly, the temperature at which the heating step in the oven 10 will be carried out, as will be illustrated below; this temperature is selected depending on the materials of which the pipes 5 and the panel 2 are made. In other words, the choice of the process parameters depends on the type of use for which the heat-exchanger element is intended; in fact it could be that the panel 2 could be made of materials such as graphite or ceramics in order to withstand high temperatures and the pipes could be made of refractory alloys based on molybdenum, tungsten or nickel or of superalloys or the like depending on the uses for which the exchanger element in question is intended.

In this particular example, it is a matter of selecting a heating temperature suitable for allowing the chosen brazing material to melt and, in the case of exchanger elements made from highly resistant materials, this heating temperature is between 900°C and 1200°C, whilst for pipes and panels made of copper and its alloys it is approximately 870°C.

In conclusion, the temperature selected must be such that it allows the brazing material interposed between the pipes and the panel to melt as well as being such that the metal of which the pipes are made is in a viscous flow state, taking account of the other fundamental parameter for the forming of the weld according to the invention, that is, the pressurisation pressure of the pipes.

The pressure, which will be described further below, must assume values such that the panel 2 in which the pipes to be brazed are accommodated is not subject to stresses which are such that they cause the panel to break; for this reason, the pressure can advantageously be chosen according to the relationship:

$$P < \frac{S}{di}\,\sigma$$

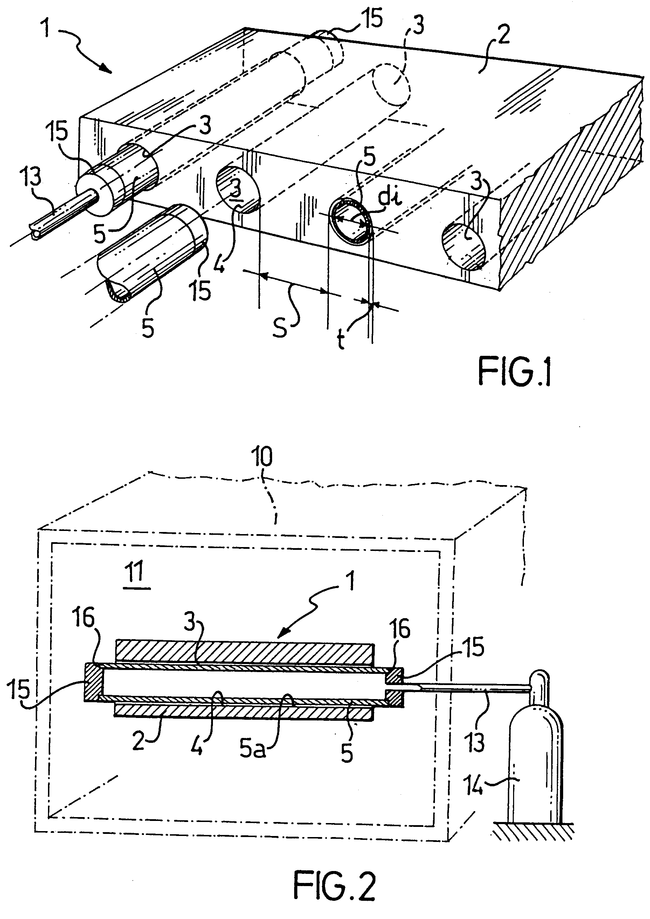

in which $\sigma$ is the yield stress, or if this is not applicable, the tensile strength of the panel material; S is the minimum distance between two adjacent seats 3 of the panel (cf. Figure 1) and di is the internal diameter of each seat.

Subsequently, the pressurization pressure in the method according to the invention must be such that allows controlled deformation of the pipes and it can be established approximately by the relationship:

$$P < \frac{2}{di}\,t\sigma'$$

in which t is the thickness of the pipe, $\sigma'$ is the yield stress of its material, and di is the above-mentioned diameter.

When the values of the pressure and temperature of the cycle have been established, as stated above, it is also possible to determine the third parameter necessary for controlling the method according to the invention, that is, the length of time for which it is performed. In fact, the above method provides that, when each pipe 5 has been introduced into the corresponding seat 3, the pipe is hermetically sealed by the application of the ends 15 which, depending on the circumstances, can be welded to the corresponding pipe or produced in the form of threaded plugs and thus screwed onto the corresponding end of the pipe which necessarily also has a thread.

The exchanger element 1 arranged in this way is then introduced into the heating chamber 11 of the oven 10 and in this step the fluid connection between the interior of the pipes 5 and the cylinder 14 delivering inert gas is established by means of the passing conduits 13.

The following step is one of combined heating and pressurisation of the element 1 by increasing the temperature in the chamber 11 and delivering gas from the cylinder 14 into the pipes 4 according to the temperature and pressure values established as shown above and maintained for sufficient time to allow the pipes 5 to deform by the desired amount; this deformation, together, in this case, with the melting of the brazing material provided between the outer surfaces 5a of the pipes and walls 4 of the accommodating seats 3, permits an ideal weld, which is free from structural defects such as those mentioned above with reference to the prior art, to be obtained.

In fact, the combined action of pressurisation and heating, performed on the pipes 5 according to the teaching of this invention, enables deformation to be obtained by viscous flow or creep of the metal forming the pipes; this creep deformation can be controlled in order to achieve the stated objects. In other words, this means that, with the method according to the invention, it is possible to vary the dimensions of the pipes so as to allow their outer surfaces to juxtapose the corresponding walls 4 without leaving empty points or interspaces even after the inevitable contraction of the pipes together with the shrinkage of the brazing material after cooling to ambient temperature.

This optimal joining of the pipes to the walls is brought about in a perfectly controllable manner which also allows the panel in which the pipes are accommodated not to be unduly stressed; it should in fact be noted that, by imposing the creep conditions on the material of the pipes, they can undergo a deformation which is substantially proportional to the application time of the internal pressurization.

Since the creep values of the materials can be read from the well-known creep diagrams showing the development of the deformation as a function of time, the pressurization time of the pipes can easily be programmed; moreover, the diagrams to which reference has been made may also be obtained by way of experiments, subjecting test pipes to pressurization cycles according to variable temperatures and length of time in order to obtain tables which can advantageously be used for applying the method according to the invention.

Finally, by suitably operating on the parameters: pressurization pressure of the pipes selected by the above formulae or possibly by other formulae, pipe heating temperature, and time for which this pressure and this temperature are maintained, it is possible to obtain a weld by virtue of a deformation by viscous flow of the pipes themselves which can be precisely controlled, ensuring very high qualitative standards and simultaneously protecting the panel of the exchanger element from any possible damage caused by excessive stresses following this deformation.

It is clear that this result renders the invention particularly suitable for the production of exchanger elements with panels made of graphite or ceramic materials and the like, which have recognized fragility.

It will be appreciated that the values assumed by the above parameters can be varied depending on the materials to which the welding method according to the invention is applied; in association with what has been stated above, these values will differ for pipes made of copper or of alloyed or special steels; it is, moreover, useful to note that it is important to take account of the presence at least of the brazing material when selecting these values. In effect, if the brasing material has chemical - physical properties rendering it more or less suitable for the local formation of an alloy with the materials of the pipe and / or of the panel, this should be duly taken into account.

## Claims

1. A method of welding the outer surface (5a) of a metal pipe (5) and the wall (4) of a pipe housing seat (3) in a panel (2) for a heat-exchanger element (1), characterized in that it comprises the following operating steps:

   - hermetically sealing the pipe (5) at opposite ends (16) and providing a fluid connection between the interior of the pipe (5) and gas delivery means (14);
   - providing heating of the so arranged pipe (5) in combination with its pressurization by delivering gas into its interior, in order to achieve creep conditions for the material of the pipe (5) and the aforesaid welding as a result of controlled deformation of the pipe (5) performed for a predetermined amount of time.

2. A method according to Claim 1, characterized in that brazing material is interposed between the outer surface (5a) of the pipe (5) and the wall (4) of the seat (3) into which the pipe is introduced.

3. A method according to Claim 1 or 2, characterized in that the pressurization inside the pipe (5) occurs for pressure values defined by the relationship

$$P < \frac{S}{di}\, \sigma$$

   in which P is the pressure, $\sigma$ is the yield stress of the panel material (2), di is the internal diameter of the pipe and S is the distance between two adjacent seats (3) in the panel (2).

4. Method according to either of Claims 1 and 2, characterized in that the pressurization inside the pipe (5) occurs for pressure values defined by the relationship

$$P < \frac{S}{di}\, \sigma$$

   in which $\sigma$ is the tensile strength of the material from which the panel (2) is made, di is the internal diameter of the pipe and S is the distance between two adjacent seats in the panel (2).

5. A method according to any one of the preceding claims, characterized in that the pressurization occurs for pressure values defined by the relationship

$$P < \frac{2}{di}\, t\sigma'$$

   in which $\sigma'$ is the yield stress of the material of the pipe (5), t is the thickness of the pipe and di is the internal diameter thereof.

**6.** A method according to any one of the preceding claims, characterized in that the heating step is carried out in a oven (10) in which the panel (2) with said pipe (5) introduced into the seat (3) is disposed, and in that the fluid connection comprises at least one wide passing conduit (13) between a hermetically sealed end (15) of the pipe (5) and the delivery means (14), the conduit (13) passing through the end (15).

## Patentansprüche

**1.** Verfahren zum Verschweißen der Außenfläche (5a) eines Metallrohrs (5) mit der Wand (4) einer Rohrgehäuseaufnahme (3) in einer Platte (2) für ein Wärmetauscherelement (1), **dadurch gekennzeichnet**, daß es die folgenden Verfahrensschritte umfaßt:

- hermetisches Abdichten des Rohrs (5) an einander gegenüberliegenden Enden (16) und Herstellen einer Fluidverbindung zwischen dem Inneren des Rohrs (5) und einer Gaszufuhreinrichtung (14);

- Erwärmen des so angeordneten Rohrs (5) bei gleichzeitiger Druckzufuhr durch Einleiten von Gas in sein Inneres, um Kriechbedingungen für das Material des Rohrs (5) und das genannte Schweißen aufgrund gesteuerter Verformung des Rohrs (5), die über einen vorgegebenen Zeitraum ausgeführt wird, zu erzielen.

**2.** Verfahren nach Anspruch 1, **dadurch gekennzeichnet**, daß sich Hartlötmaterial zwischen der Außenfläche (5a) des Rohrs (5) und der Wand (4) der Aufnahme (3) befindet, in die das Rohr eingeführt wird.

**3.** Verfahren nach Anspruch 1 oder 2, **dadurch gekennzeichnet**, daß der Druck im Inneren des Rohrs (5) für Druckwerte auftritt, die durch die folgende Beziehung definiert sind:

$$P < \frac{S}{di}\, \sigma$$

wobei P der Druck ist, $\sigma$ die Fließspannung des Plattenmaterials (2) ist, di der Innendurchmesser des Rohrs ist und S der Abstand zwischen zwei benachbarten Aufnahmen (3) in der Platte (2) ist.

**4.** Verfahren nach einem der Ansprüche 1 und 2, **dadurch gekennzeichnet**, daß der Druck im Inneren des Rohrs (5) für Druckwerte auftritt, die durch die folgende Beziehung definiert sind:

$$P < \frac{S}{di}\, \sigma$$

wobei $\sigma$ die Fließspannung des Materials ist, aus dem die Platte (2) besteht, di der Innendurchmesser des Rohrs ist und S der Abstand zwischen zwei benachbarten Aufnahmen in der Platte (2) ist.

**5.** Verfahren nach einem der vorangehenden Ansprüche, **dadurch gekennzeichnet**, daß der Druck für Druckwerte auftritt, die durch die folgende Beziehung definiert sind:

$$P < \frac{2}{di}\, t\sigma'$$

wobei $\sigma'$ die Fließspannung des Materials des Rohrs (5) ist, t die Dicke des Rohrs ist und di der Innendurchmesser desselben ist.

**6.** Verfahren nach einem der vorangehenden Ansprüche, **dadurch gekennzeichnet**, daß der Schritt des Erwärmens in einem Ofen (10) ausgeführt wird, in dem die Platte (2) mit dem Rohr (5), das in die Aufnahme (3) eingeführt ist, angeordnet ist, und daß die Fluidverbindung wenigstens eine breite Durchgangsleitung (13) zwischen einem hermetisch abgedichteten Ende (15) des Rohrs (5) und der Zufuhreinrichtung (14) umfaßt, wobei die Leitung (13) durch das Ende (15) hindurchverläuft.

## Revendications

**1.** Procédé de soudage de la surface extérieure (5a) d'un tube métallique (5) sur la paroi (4) d'un siège (3) récepteur du tube dans un panneau (2) d'un élément d'échangeur thermique (1), caractérisé en ce que qu'il comprend les étapes opérationnelles suivantes:

- la fermeture hermétique du tube (5) aux extrémités opposées (16) de celui-ci, et l'établissement d'une communication de fluide entre l'intérieur du tube (5) et des moyens (14) d'alimentation en gaz;
- l'application d'un chauffage du tube (5) ainsi agencé, en combinaison avec sa mise sous pression en acheminant du gaz à l'intérieur de celui-ci, afin d'atteindre des conditions de fluage de la matière du tube (5), et le soudage susmentionné, grâce à la déformation contrôlée du tube (5) effectuée pendant une durée prédéterminée.

**2.** Procédé selon la revendication 1, caractérisé en ce que le matériau de brasage est interposé entre la surface extérieure (5a) du tube (5) et la paroi (4) du siège (3), dans lequel le tube est introduit.

**3.** Procédé selon la revendication 1 ou 2, caractérisé en ce que la mise sous pression à l'intérieur du tube (5) est effectuée pour des valeurs de pression définies par la relation:

$$P < \frac{S}{di} \sigma$$

où P est la pression, $\sigma$ est la limite élastique du matériau du panneau (2), di est le diamètre intérieur du tube, et S est la distance entre deux sièges adjacents (3) du panneau (2).

4. Procédé selon l'une des revendications 1 et 2, caractérisé en ce que la mise sous pression à l'intérieur du tube (5) est effectuée pour des valeurs de pression définies par la relation:

$$P < \frac{S}{di} \sigma$$

où $\sigma$ est la résistance à la rupture du matériau dont est fait le panneau (2), di est le diamètre intérieur du tube, et S est la distance entre deux sièges adjacents du panneau (2).

5. Procédé selon l'une quelconque des revendications précédentes, caractérisé en ce que la mise sous pression s'effectue pour des valeurs de pression définies par la relation:

$$P < \frac{2}{di} t\sigma'$$

où $\sigma'$ est la limite élastique du matériau du tube (5), t est l'épaisseur du tube, et di est le diamètre intérieur de celui-ci.

6. Procédé selon l'une quelconque des revendications précédentes, caractérisé en ce que l'étape de chauffage est effectuée dans un four (10), dans lequel on dispose le panneau (2) muni dudit tube (5) introduit dans le siège (3), et en ce que la communication de fluide comprend au moins un conduit de passage large (13) compris entre une extrémité (15) hermétiquement fermée du tube (5) et les moyens d'alimentation (14), le conduit (13) traversant l'extrémité (15).

FIG.1

FIG.2